(19) Europäisches Patentamt
European Patent Office
Office européen des brevets

(11) **EP 3 746 760 B1**

(12) **EUROPEAN PATENT SPECIFICATION**

(45) Date of publication and mention
of the grant of the patent:
**26.06.2024 Bulletin 2024/26**

(21) Application number: **19747915.7**

(22) Date of filing: **30.01.2019**

(51) International Patent Classification (IPC):
**H01J 49/04** (2006.01)

(52) Cooperative Patent Classification (CPC):
**H01J 49/0431**

(86) International application number:
**PCT/US2019/015894**

(87) International publication number:
**WO 2019/152548 (08.08.2019 Gazette 2019/32)**

(54) **SAMPLING PROBE**

ENTNAHMESONDE

SONDE D'ÉCHANTILLONNAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2018 US 201815883560**

(43) Date of publication of application:
**09.12.2020 Bulletin 2020/50**

(73) Proprietor: **UT-Battelle, LLC
Oak Ridge, Tennessee 37831-6258 (US)**

(72) Inventor: **VAN BERKEL, Gary
Oak Ridge, Tennessee 37830 (US)**

(74) Representative: **Sandvoß, Stefanie
Patentanwaltskanzlei Sandvoß
Dethmarstraße 44a
31139 Hildesheim (DE)**

(56) References cited:
**WO-A1-00/19193      US-A- 5 536 471
US-A1- 2004 036 020    US-A1- 2004 149 053
US-A1- 2011 036 453    US-A1- 2016 181 078
US-A1- 2016 299 041    US-A1- 2016 299 109
US-A1- 2016 299 109**

**Description**

**FIELD OF THE INVENTION**

The present invention relates to a sampling system and to a method for sampling.

**BACKGROUND OF THE INVENTION**

Liquid extraction sampling probes are used as a means for directing solvent to a probe end to collect sample, whether by the sample moving into the solvent such as in a droplet, in the form of an aerosol from for example a laser ablation, or a liquid or solid material on a support like a solid phase extraction affinity material or the solvent flowing to contact the surface of the sample material, suspending sample material in the solvent, and directing this suspended sample material to a mass spectrometry device or other analytical device. Examples of such probes can be found in US6803566, US6784439, US8519330, US6677593, US9063047, US8486703, US8384020, US7295026, US8637813, US8117929, US9153425, US7995216, US9064680, US8003937, US9140633, US9176025, US9390901, US8084735, US9632066, US9297828, US8084735, and US20160299041.

Prior sampling probes are usually fixed in orientation. Use of such probes in other orientations than the preferred fixed position or in varying positions from that fixed position during operation can lead to loss of liquid from the sampling end of the probe and degrade sampling results or negatively affect the subject being sampled.

Prior sampling probes included functionality for operating in overflow, balanced, or underflow modes, but for practical purposes were limited in an available operational mode by the orientation of the sampling probe. For instance, U.S. Patent No. 9,632,066 "Open Port Sampling Interface" discloses a sampling probe that may have different orientations and operate in a variety of flow modes. In some embodiments the reference describes an overflow collection system for collecting overflow liquid from the probe. The overflow collection system as described is intended for operation with the sampling end of the probe advantageously situated over the overflow collection system such that overflow liquid would travel under the influence of gravity into the overflow collection system. If the sampling end of the probe was not advantageously situated over the overflow collection system then the probe would need to operate in balanced mode or underflow mode when flowing solvent through the probe in order to avoid spilling solvent.

Also, such probes had a fixed solvent supply and solvent exhaust conduits, which do not allow for flexibility in the orientation, extension and retraction of the sampling end of the probe. Furthermore, such probes operated at a relatively short distance from the analytical device and do not allow for use at extended distances from the analytical device with near real-time reporting capability. Furthermore, the solvent flow rate through the capture probe was dictated by a flow rate that could be accommodated by the analytical device, placing an upper limit on the solvent flow rate.

Accordingly, there is a need for a sampling probe that overcomes some of the limitations of the prior art.

US 2016/299109 A1 discloses a system for sampling a sample material including a probe which can have an outer probe housing with an open end. A liquid supply conduit within the housing has an outlet positioned to deliver liquid to the open end of the housing. The liquid supply conduit can be connectable to a liquid supply for delivering liquid at a first volumetric flow rate to the open end of the housing. A liquid exhaust conduit within the housing is provided for removing liquid from the open end of the housing. A liquid exhaust system can be provided for removing liquid from the liquid exhaust conduit at a second volumetric flow rate, the first volumetric flow rate exceeding the second volumetric flow rate, wherein liquid at the open end will receive sample, liquid containing sample material will be drawn into and through the liquid exhaust conduit, and liquid will overflow from the open end.

**SUMMARY OF THE INVENTION**

According to the present invention, a sampling system includes a sampling probe including a housing. The housing has a probe end with a sampling fluid opening, a sampling fluid supply conduit and a sampling fluid exhaust conduit. The sampling fluid supply conduit supplies sampling fluid to the sampling fluid opening of the probe. The sampling fluid forms a capture surface at the sampling fluid opening for receiving and capturing sample transferred to contact the capture surface. The sampling fluid exhaust conduit comprises a sampling fluid exhaust conduit inlet opening for removing sampling fluid from the sampling fluid opening, and a sampling fluid exhaust conduit outlet opening for removing fluid from the sampling fluid exhaust conduit.

According to the present invention, a sampling fluid analytic conduit includes a sampling fluid analytic conduit inlet opening spaced upstream from the sampling fluid exhaust conduit outlet opening, downstream from the sampling fluid exhaust conduit inlet opening, and from a wall of the sampling fluid exhaust conduit. According to the invention, fluid flowing through the sampling fluid exhaust conduit has a flow axis at the sampling fluid analytic conduit inlet opening that is parallel to a flow axis of fluid flowing through the sampling fluid analytic conduit inlet opening. According to the invention, the sampling fluid analytic conduit inlet opening is spaced from the wall of the sampling fluid exhaust conduit.

According to the present invention, the system further includes at least one pump for continuously moving sampling fluid through the sampling fluid supply conduit to the sampling fluid opening, and through the sampling fluid exhaust conduit. According to the present invention, at least one analytic conduit pump may be provided for moving sampling fluid through the sampling fluid analytic conduit. In some embodiments, the sampling fluid may be drawn through the sampling fluid analytic conduit by suction applied at a discharge end of the sampling fluid analytic conduit. In some embodiments, the sampling fluid may be drawn through the sampling fluid analytic conduit by suction applied at a discharge end of the sampling fluid analytic conduit, wherein the suction is imparted by flowing a gas past the discharge end. In some aspects, the gas comprises a nebulizing gas of an electrospray interface situated at the discharge end of the sampling fluid analytic conduit.

In operation of the system a portion of the sampling fluid exits, or is exposed through, the sampling fluid opening to receive and capture the sample. The sampling fluid and captured sample may flow through the sampling fluid exhaust opening into the sampling fluid exhaust conduit. The sampling fluid and captured sample are transferred from the probe end through the sampling fluid exhaust conduit to an entrance of a sampling fluid analytic conduit. An analysis portion of the sampling fluid and captured sample may be diverted through the sampling fluid analytic conduit while a remainder portion of the sampling fluid and captured sample flows on to an exhaust conduit pump. In this manner, an analysis portion of the sampling fluid that passed the sampling fluid opening exits the probe and is diverted through the sampling fluid analytic conduit.

In some embodiments, the system may operate in an overflow mode in which a portion of the sampling fluid exits the sampling fluid opening and washes over the probe end to provide a washing action of the probe end.

The volumetric flow rate of sampling fluid through the sampling fluid analytic conduit can be from 0.0001 % to 100 % of the volumetric flow rate of sampling fluid through the sampling fluid exhaust conduit. In some embodiments, the sampling fluid analytic conduit inside diameter is from 0.2 % to 100 % of the sampling fluid exhaust conduit inside diameter. An analytic conduit plug width of sampling fluid flowing through the sampling fluid analytic conduit may be from 0.2 % to 100 % or more of an exhaust conduit plug width of sampling fluid flowing through the sampling fluid exhaust conduit.

In some embodiments, a relationship between the volumetric flow rate of exhaust conduit sampling fluid flowing through the sampling fluid exhaust conduit ($VF_E$), the volumetric flow rate of analytic conduit sampling fluid flowing through the sampling fluid analytic conduit ($VF_A$), the inside diameter of the sampling fluid exhaust conduit ($D_E$), and the inside diameter of the sampling fluid analytic conduit ($D_A$) is provided by:

$$D_A = D_E \sqrt{VF_A / VF_E}$$

In some embodiments, a sampling system may include a wash fluid collection component. The wash fluid collection component comprising a wash fluid collection conduit having a wash fluid inlet opening proximate to the probe end for receiving and capturing overflow sampling fluid and/or overflow sample and a wash fluid outlet opening for discharging the overflow sampling fluid and/or overflow sample. A portion of sampling fluid and/or sample may overflow from the probe end and enter the wash fluid collection conduit. The overflowing sampling fluid washes the distal end of at least one of the sampling fluid supply conduit and the sampling fluid exhaust conduit. There can be at least one pump to move sampling fluid through the wash fluid collection conduit and out of the wash fluid outlet opening. The system can further include a heater for heating the wash fluid collection conduit to prevent the formation of condensation on exterior walls of the wash fluid collection conduit.

In some embodiments, the wash fluid collection component may be operative to actively capture overflow sampling fluid and/or overflow sample from a region about the probe end. In some embodiments, the wash fluid collection component may be operative to actively capture overflow sampling fluid and/or overflow sample by employing a vacuum source to impart a suction effect at the wash fluid inlet, evacuating the region about the probe end. In some embodiments, the suction effect may be sufficiently strong to capture overflow solvent and/or overflow sample in the region about the probe end free from the capture surface of the probe. In some embodiments, the suction effect may be sufficiently strong to capture overflow solvent and/or overflow sample in the region about the probe end and to draw the captured overflow solvent and/or overflow sample into the wash fluid inlet against the influence of gravity.

In some embodiments, the wash fluid connection component may comprise a wash fluid collection conduit co-axial to the sampling fluid supply conduit. In some embodiments, the wash fluid connection component may comprise a wash fluid collection conduit co-axial to the sampling fluid exhaust conduit. In some embodiments, the wash fluid connection component may comprise a wash fluid collection conduit co-axial and external to the sampling fluid supply conduit and the sampling fluid exhaust conduit.

In some embodiments, the sampling fluid supply conduit and the sampling fluid exhaust conduit may be coaxial. In some embodiments, the sampling fluid exhaust conduit and the sampling fluid analytic conduit may be coaxial.

In some embodiments, the sampling fluid supply conduit and the sampling fluid exhaust conduit may be co-linear.

In some embodiments, the sampling fluid supply conduit and the sampling fluid exhaust conduit may be oriented to intersect at an acute angle at the sample fluid opening. In some embodiments, the sampling fluid supply conduit and the sampling fluid exhaust conduit may be oriented to intersect at an obtuse angle at the sample fluid opening.

In some embodiments, the sampling fluid supply conduit and the sampling fluid exhaust conduit may be oriented to intersect at a transverse angle at the sample fluid opening.

According to the invention, the sampling fluid analytic conduit is in fluid communication with a sampling fluid analytic pump. In some embodiments, the sampling fluid analytic pump may comprise a mechanical pump. In some embodiments, the sampling fluid analytic pump may comprise a fluid supply directed to flow past the discharge end of the sampling fluid analytic conduit and impart a suction effect to draw a diverted portion of the sampling fluid and captured sample as a diverted analytic portion of sampling fluid from the sampling fluid analytic conduit. In some embodiments, the sampling fluid analytic conduit may comprise a non-conductive portion. In some embodiments, the sampling fluid analytic conduit discharge end may comprise a conductive outlet portion operative to act as an electrospray electrode for applying a voltage from a voltage source to the diverted analytic portion of sampling fluid exiting from the sampling fluid analytic conduit discharge end to discharge and ionize the diverted analytic portion of sampling fluid. In some embodiments, the system may further include a conductive electrospray entrance. The electrospray entrance comprising an electrode for applying a voltage from a voltage source to the electrospray electrode.

According to the present invention, a system for sampling is provided that includes a sampling probe. The sampling probe includes a housing. The housing has a probe end with a sampling fluid opening. A sampling fluid supply conduit can have a distal end and a sampling fluid exhaust conduit can have a distal end. The sampling fluid supply conduit supplies sampling fluid to the sampling fluid opening. The sampling fluid exhaust conduit has a sampling fluid exhaust conduit inlet opening for removing sampling fluid from the sampling fluid opening and an exhaust conduit outlet opening for removing sampling fluid from the sampling fluid exhaust conduit. In some embodiments, the system further comprises a wash fluid collection conduit including a wash fluid inlet opening and a wash fluid outlet opening. In some embodiments, during operation a portion of the sampling fluid overflows the sample fluid exhaust conduit and enters the wash fluid collection conduit. The overflowing sampling fluid washes the distal end of at least one of the sampling fluid supply conduit and the sampling fluid exhaust conduit. In some embodiments, the system may further include at least one pump for continuously moving a portion of the sampling fluid exiting the sampling fluid opening to contact the sample and return to the sampling fluid exhaust opening, for moving a portion of the sampling fluid exiting the sampling fluid opening to wash the probe end, for moving a portion of the sampling fluid exiting the probe through the sampling fluid exhaust conduit, and for moving sampling fluid through the wash fluid collection conduit and out of the wash fluid outlet opening.

According to the present invention, a sampling system is provided that includes a sampling fluid analytic conduit. The sampling fluid analytic conduit having an analytic fluid conduit inlet opening spaced downstream from the sampling fluid exhaust conduit inlet opening, upstream from the sampling fluid exhaust conduit outlet opening, and, spaced from the sampling fluid exhaust conduit internal wall.

According to the present invention, fluid flowing through the sampling fluid exhaust conduit has a flow axis at the sampling fluid analytic conduit inlet opening that is parallel to a flow axis of fluid flowing through the sampling fluid analytic conduit inlet opening.

According to the present invention, the system further includes at least one pump for continuously moving sampling fluid through the sampling fluid supply conduit to the sampling fluid opening and through the sampling fluid exhaust conduit, and at least one sampling fluid analytic conduit pump for moving sampling fluid through the sampling fluid analytic conduit. In operation, at least a portion of the sampling fluid exits the sampling fluid opening to present a capture surface, contact and capture a sample, and return to enter the sampling fluid exhaust conduit inlet opening with the captured sample. In some embodiments, a portion of the sampling fluid exiting the sampling fluid opening may overflow to wash the probe end. In some embodiments a wash fluid collection conduit may be provided and the overflowing sampling fluid may enter a wash fluid collection conduit opening for transport through the wash fluid collection conduit. According to the invention, at least a portion of the sampling fluid entering the sampling fluid exhaust conduit inlet opening exits the probe through the sampling fluid analytic conduit.

According to the present invention, a sampling method according to claim 15 is provided.

In some aspects, the wash sampling fluid drawn into a wash fluid collection conduit and out of the wash fluid outlet opening.

## BRIEF DESCRIPTION OF THE DRAWINGS

There are shown in the drawings embodiments that are presently preferred it being understood that the invention is not limited to the arrangements and instrumentalities shown, wherein:

Figure 1A is a schematic diagram of a system for sampling including a probe.

Figure 1B is a schematic diagram of a spray nozzle from Figure 1A.

Figure 2 is a schematic diagram of a probe having co-axial orientation between the sampling fluid supply conduit and the sampling fluid exhaust conduit.

Figure 3 is a schematic diagram of a probe having co-linear orientation between the sampling fluid supply conduit and the sampling fluid exhaust conduit.

Figure 4 is a schematic diagram of a probe having an acute orientation between the sampling fluid supply conduit and the sampling fluid exhaust conduit.

Figure 5 is a schematic diagram of a probe having a transverse orientation between the sampling fluid supply conduit and the sampling fluid exhaust conduit.

Figure 6 is a schematic diagram of a delivery end of the system for sampling including a sampling fluid exhaust conduit, a sampling fluid analytic conduit, and a spray nozzle.

Figure 7 is a schematic diagram of a sampling fluid exhaust conduit and a sampling fluid analytic conduit where the linear flow velocity (LFV) is $LFV_1 > LFV_2$ (Figure 7A); $LFV_1 = LFV_2$ (Figure 7B); and $LFV_1 < LFV_2$ (Figure 7C).

Figure 8 is a schematic diagram of a sampling fluid exhaust conduit and a sampling fluid analytic conduit with $LFV_1 > LFV_2$, $PW_1 > PW_2$, and $C_1 = C_2$ (Figure 8A); $LFV_1 = LFV_2$, $PW_1 = PW_2$, and $C_1 = C_2$ (Figure 8B); and $LFV_1 < LFV_2$, $PW_1 < PW_2$, $C_1 > C_2$ (Figure 8C).

Figure 9 is a schematic diagram illustrating the calculation for $D_{iso}$.

Figure 10 is a schematic diagram illustrating a system for sampling according to the invention operating in general atmospheric pressure ionization mode.

Figure 11 is a schematic illustration of a first circuit connection system according to the invention for a system for sampling operating in positive ion mode electrospray (Figure 11A) and negative ion mode electrospray (Figure 11B).

Figure 12 is a schematic illustration of a second circuit connection system according to the invention for a system for sampling operating in positive ion mode electrospray (Figure 12A) and negative ion mode electrospray (Figure 12B).

Figure 13 is a schematic diagram of a system for sampling with a sampling fluid analytic conduit and a wash conduit.

## DETAILED DESCRIPTION OF THE INVENTION

According to the present invention, a system for sampling includes a sampling probe including a housing. The housing has a probe end with a sampling fluid opening, a sampling fluid supply conduit and a sampling fluid exhaust conduit. The sampling fluid supply conduit supplies sampling fluid to the sampling fluid opening. The sampling fluid exhaust conduit including a sampling fluid exhaust conduit inlet opening for removing sampling fluid from the sampling fluid opening, and a sampling fluid exhaust conduit outlet opening for discharging fluid from the sampling fluid exhaust conduit.

According to the present invention, a sampling fluid analytic conduit for diverting a portion of the sampling fluid from the sampling fluid exhaust conduit is also provided in the sampling probe. The sampling fluid analytic conduit including a sampling fluid analytic conduit inlet opening spaced upstream from the sampling fluid exhaust conduit outlet opening, downstream from the sampling fluid exhaust conduit inlet opening, and from the wall of the sampling fluid exhaust conduit. According to the present invention, fluid flowing through the sampling fluid exhaust conduit may have a flow axis at the sampling fluid analytic conduit inlet opening that is parallel to a flow axis of fluid flowing through the sampling fluid analytic conduit inlet opening. According to the present invention, the sampling fluid analytic conduit inlet opening is spaced from the wall of the sampling fluid exhaust conduit to avoid wall effects.

According to the present invention, the system for sampling further includes at least one pump for continuously moving sampling fluid through the sampling fluid supply conduit to the sampling fluid opening, through the sampling fluid exhaust conduit, and the sampling fluid analytic conduit. A portion of the sampling fluid exits the sampling fluid opening to contact the sample and returns to the sampling fluid exhaust opening. According to the present invention, a portion of the sampling fluid exits the sampling fluid opening to wash the probe end. According to the present invention, another portion of the sampling fluid exits the probe through the sampling fluid analytic conduit.

In embodiments, the volumetric flow rate of sampling fluid through the sampling fluid analytic conduit can be from 0.0001 % to 100 % of the volumetric flow rate of sampling fluid through the sampling fluid exhaust conduit. In some aspects, the volumetric flow rate of sampling fluid through the sampling fluid analytic conduit may be adjusted by varying pumping applied to at least one of the sampling fluid analytic conduit and the sampling fluid exhaust conduit. In some aspects, the pumping may comprise a suction applied to a discharge end of the sampling fluid analytic conduit. The suction may be provided, for instance, by flowing a nebulizing gas past the discharge end of the sampling fluid conduit.

The sampling fluid analytic conduit and the sampling fluid exhaust conduit have an inside diameter. The inside diameter of the sampling fluid analytic conduit is from 0.2 % to 100 % of the inside diameter of the sampling fluid exhaust conduit.

A plug width of sampling fluid flowing through the sampling fluid analytic conduit can be from 0.2 % to 100 % of the plug width of sampling fluid flowing through the sampling fluid exhaust conduit. The plug width is dependent upon the relative diameters of the sampling fluid exhaust conduit and sampling fluid analytic conduit, and the relative flow rates through the sampling fluid exhaust conduit and sampling fluid analytic conduit. In the case where the linear flow velocity in the analytic conduit is greater than the linear flow velocity in the exhaust conduit the plug width in the analytic conduit can be greater than the plug width in the exhaust conduit. In the case where the linear flow velocity in the analytic conduit is smaller than the linear flow velocity in the exhaust conduit the plug width in the analytic conduit can be smaller than the plug width in the exhaust conduit.

The relationship between the volumetric flow rate of sampling fluid flowing through the sampling fluid exhaust conduit ($VF_E$), the volumetric flow rate of sampling fluid flowing through the sampling fluid analytic conduit ($VF_A$), the inside diameter of the sampling fluid exhaust conduit ($D_E$), and the inside diameter of the sampling fluid analytic conduit ($D_A$) is:

$$D_A = D_E \sqrt{VF_A / VF_E}$$

In the case of isokinetic flow the linear flow velocities in the two conduits are the same, but the volumetric flow rates are not the same unless the inside diameter of the two conduits is the same.

In some embodiments, a sampling system may further include a wash fluid collection component. The wash fluid collection component comprises a wash fluid collection conduit having a wash fluid inlet opening proximate to the probe end for receiving overflow sampling fluid and/or overflow sample, and a wash fluid outlet opening for discharging the overflow sampling fluid and/or overflow sample. A portion of sampling fluid or sample may overflow from the probe end and enter the wash fluid collection conduit. The overflowing sampling fluid washes the distal end of at least one of the sampling fluid supply conduit and the sampling fluid exhaust conduit and enters the wash fluid collection conduit. The pump moves sampling fluid through the wash fluid collection conduit and out of the wash fluid outlet opening.

In some embodiments, the wash fluid collection component may be operative to actively capture overflow sampling fluid and/or overflow sample from a region about the probe end. In some embodiments, the wash fluid collection component may be operative to actively capture overflow sampling fluid and/or overflow sample by imparting a suction effect at the wash fluid inlet, evacuating the region about the probe end. In some embodiments, the suction effect may be sufficiently strong to capture overflow solvent and/or overflow sample in the region about the probe end free from the capture surface of the probe. In some embodiments, the suction effect may be sufficiently strong to capture overflow solvent and/or overflow sample in the region about the probe end and to draw the captured overflow solvent and/or overflow sample into the wash fluid inlet against the influence of gravity.

In some embodiments, the system can further include a heater for heating components of the wash fluid collection conduit to counter evaporative cooling effects so as to inhibit condensation of ambient atmospheric vapors or solvent vapors from the sampling fluid on the external surfaces of the device.

The orientation between the sampling fluid supply conduit and the sampling fluid exhaust conduit can take many different forms. In one embodiment, the orientation between the sampling fluid supply conduit and the sampling fluid exhaust conduit can be coaxial. The orientation between the sampling fluid exhaust conduit and the sampling fluid analytic conduit can also vary. In an embodiment the sampling fluid exhaust conduit and the sampling fluid analytic conduit may be coaxial. The orientation between the sampling fluid supply conduit and the sampling fluid exhaust conduit may be co-linear. The sampling fluid supply conduit and the sampling fluid exhaust conduit may be oriented to intersect at an acute angle at the sample fluid opening. The sampling fluid supply conduit and the sampling fluid exhaust conduit may be oriented to intersect at an obtuse angle at the sample fluid opening. The sampling fluid supply conduit and the sampling fluid exhaust conduit may be oriented to intersect at a transverse angle at the sample fluid opening.

For example, the solvent fluid analytic conduit can be in fluid communication with a sampling exhaust conduit. The sampling fluid exhaust conduit may comprise any number of suitable materials including stainless steel (with proper grounding), fused silica, Teflon or other fluorinated polymer material, polyether ether ketone (PEEK), or PEEK encapsulated fused silica. The sampling fluid exhaust conduit can be extremely short (millimeters to centimeters) or of significant length being a meter or more in length. The sampling fluid exhaust conduit extends into the probe housing as shown.

The sampling fluid exhaust conduit may comprise a rigid conduit or, conveniently, may comprise a flexible conduit. It is also possible to have at least a portion of the sampling fluid exhaust conduit comprised of a portion of the probe housing, which need not be flexible, in fluid communication with a separate portion of the sampling fluid exhaust conduit extending out of the probe housing that comprises a different material, such as a flexible material. Such fluid communication linkages are preferably avoided to reduce the risk of leaks, and accordingly in the embodiment shown a continuous flexible exhaust fluid conduit extends into the probe housing.

The sampling fluid analytic conduit can include a non-conductive outlet portion. In some embodiments, a discharge end of the sampling fluid analytic conduit may comprise an electrospray electrode. The outlet portion of the sampling fluid analytic conduit at the discharge end can include an electrode for applying a voltage from a voltage source to sampling fluid flowing through the outlet portion for discharge at the discharge end. The system can further include a conductive electrospray entrance proximate to the discharge end. The electrospray entrance can include an electrode for applying a voltage from a voltage source to the electrospray electrode and fluid flowing therein. By way of example, for instance, the sampling fluid analytic conduit may comprise a fused silica conduit with a conductive portion at the discharge end to receive the voltage from the voltage source.

The system for sampling includes a sampling probe including a housing. The housing has a probe end with a sampling fluid opening, a sampling fluid supply conduit having a distal end and a sampling fluid exhaust conduit having a distal end. The sampling fluid supply conduit supplies sampling fluid to the sampling fluid opening. The sampling fluid exhaust conduit has a sampling fluid exhaust conduit inlet opening for removing sampling fluid from the sampling fluid opening and a sampling fluid exhaust conduit outlet opening for removing sampling fluid from the sampling fluid exhaust conduit. In some embodiments, a wash fluid collection component may be provided for collecting overflow sample fluid. The wash fluid collection component comprising a wash fluid collection conduit having a wash fluid inlet opening and a wash fluid outlet opening. A portion of the sampling fluid overflows the sample fluid exhaust conduit and enters the wash fluid collection conduit. The overflowing sampling fluid washes the distal end of at least one of the sampling fluid supply conduit and the sampling fluid exhaust conduit.

The system further includes at least one pump for continuously moving a portion of the sampling fluid exiting the sampling fluid opening to contact the sample and returning to the sampling fluid exhaust opening, for moving a portion of the sampling fluid exiting the sampling fluid opening to wash the probe end, for moving a portion of the sampling fluid exiting the probe through the sampling fluid exhaust conduit. A pump can also be provided for moving sampling fluid through the wash fluid collection conduit and out of the wash fluid outlet opening. Sampling fluid will usually enter the probe under the pressure of an external sampling fluid source, however, optionally a pump can be provided to meter and control the pressure of the sampling fluid entering the probe.

The system for sampling further includes a sampling fluid analytic conduit for receiving a diverted portion of the sampling fluid passing through the sampling fluid exhaust conduit. The sampling fluid analytic conduit has an analytic fluid conduit inlet opening spaced downstream from the sampling fluid exhaust conduit inlet opening, upstream from the sampling fluid exhaust conduit outlet opening, and spaced from a wall of the sampling fluid exhaust conduit. The sampling fluid flowing through the sampling fluid exhaust conduit has a flow axis at the sampling fluid analytic conduit inlet opening that is parallel to a flow axis of fluid flowing through the sampling fluid analytic conduit inlet opening. The sampling fluid analytic conduit inlet opening is spaced from the wall of the sampling fluid exhaust conduit to avoid wall effects.

At least one pump or solvent source supply pressure can continuously move sampling fluid through the sampling fluid supply conduit to the sampling fluid opening, and a separate pump can be provided to move the sampling fluid through the sampling fluid exhaust conduit or a pump in the system can be set up to pump more than one conduit. A pumping source is provided for moving fluid through the sampling fluid analytic conduit. In some aspects, the pumping source may comprise a fluid flowing past a discharge end of the sampling fluid analytic conduit. In some aspects, the fluid comprises a nebulizing gas for combining with discharge from the sampling fluid analytic conduit in an electrospray operation.

Still another pump can be provided to move fluid through the wash conduit, if a wash conduit is provided.

In operation, at least a portion of the sampling fluid is exposed at the sampling fluid opening to contact the sample and returns to the system through the sampling fluid exhaust conduit inlet opening. In an aspect, a diverted portion of the sampling fluid exits the probe through the sampling fluid analytic conduit for delivery to an analytical device. A remaining portion of the sampling fluid exits the probe through the sampling fluid exhaust conduit outlet opening. In some embodiments, a portion of the sampling fluid exposed at the sampling fluid opening may exit from the sampling fluid opening to overflow and wash the probe end. The overflow sampling fluid may be captured by a wash fluid collection component that comprises a wash fluid collection conduit for collecting and transporting overflow sampling fluid from the probe end. The overflow sampling fluid may flow, or be drawn, to enter the wash fluid collection conduit through a wash fluid collection conduit inlet opening.

A method for sampling includes the step of providing a sampling probe comprising a housing having a probe end with a sampling fluid opening, a sampling fluid supply conduit and a sampling fluid exhaust conduit. The sampling fluid supply conduit supplies sampling fluid to the sampling fluid opening. The sampling fluid exhaust conduit comprising a sampling fluid exhaust conduit inlet opening for removing sampling fluid from the sampling fluid opening and a sampling fluid exhaust conduit outlet opening for removing sampling fluid from the sampling fluid exhaust conduit.

A sampling fluid analytic conduit has a sampling fluid analytic conduit inlet opening spaced upstream from the sampling fluid exhaust conduit outlet opening and downstream from the sampling fluid exhaust conduit inlet opening. Fluid flowing through the sampling fluid exhaust conduit has a flow axis at the sampling fluid analytic conduit inlet opening that is parallel to a flow axis of fluid flowing through the sampling fluid analytic conduit inlet opening. The sampling fluid analytic conduit inlet opening is spaced from the wall of the sampling fluid exhaust conduit.

The method further includes the step of moving sampling fluid through the sampling fluid supply conduit to the sampling fluid opening, through the sampling fluid exhaust conduit, and the sampling fluid analytic conduit. A portion of the sampling fluid exits the sampling fluid opening to contact the sample and returning to the sampling fluid exhaust conduit inlet opening. A portion of the sampling fluid exits the sampling fluid opening to wash the probe end. Another portion of the sampling fluid exits the probe through the sampling fluid analytic conduit. Sampling fluid flowing through the sampling fluid analytic conduit can be isokinetic with the sampling fluid flowing though the sampling fluid exhaust conduit.

A method for sampling includes the step of providing a sampling probe comprising a housing. The housing has a probe end with a sampling fluid opening, a sampling fluid supply conduit having a distal end and a sampling fluid exhaust conduit having a distal end. The sampling fluid supply conduit supplies sampling fluid to the sampling fluid opening. The sampling fluid exhaust conduit has a sampling fluid exhaust opening for removing sampling fluid from the sampling fluid opening. The probe can further include a wash fluid collection conduit. The wash fluid collection conduit can have a wash fluid inlet opening and a wash fluid outlet opening. A portion of the sampling fluid overflows the sample fluid exhaust conduit and enters the wash fluid collection conduit. The overflowing sampling fluid washes the distal end of at least one of the sampling fluid supply conduit and the sampling fluid exhaust conduit.

The method further includes the step of moving sampling fluid through the sampling fluid supply conduit to the sampling fluid opening. A portion of the sampling fluid exits the sampling fluid opening to contact the sample and returns to the sampling fluid exhaust opening and flows through the sampling fluid exhaust conduit. Another portion of the sampling fluid exits the sampling fluid opening to wash the probe end and flows through the wash fluid collection conduit and out of the wash fluid outlet opening.

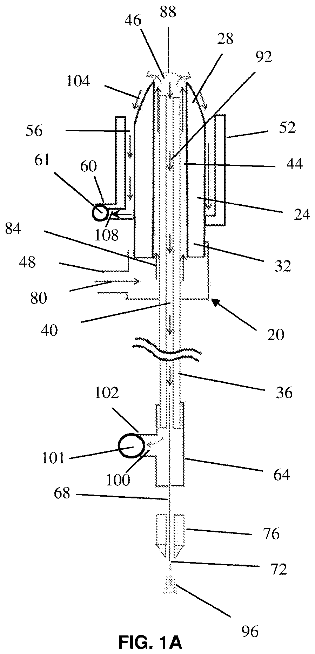

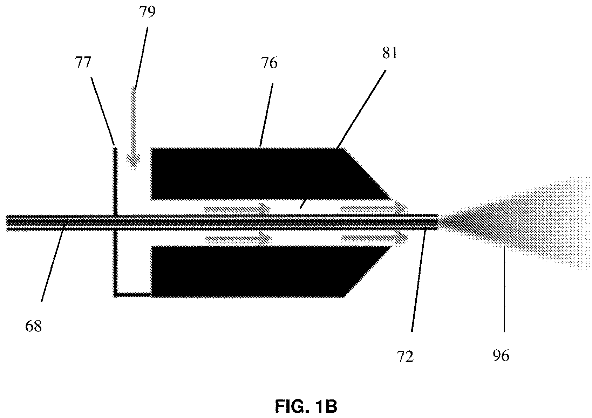

Figures 1A and 1B are schematic diagrams of an embodiment of a system for sampling including a probe. The system includes a sampling probe 20 having a housing 24 with a distal probe end 28 and a proximal end 32. The housing 24 defines a sampling fluid supply conduit 44 for delivering sampling fluid to a sampling fluid opening 46. The sampling fluid forming a capture surface at the sampling fluid opening 46 for receiving and capturing sample transferred to contact the capture surface. In some embodiments, a sampling fluid exhaust conduit 36 defining an interior channel 40 can be provided in coaxial relationship with the sampling fluid supply conduit 44. Sampling fluid supply conduit 44 receives sampling fluid through a sampling fluid inlet 48 in an inlet fitting 50. In the embodiment of Figure 1A, a wash fluid collection component is included for receiving and containing overflow sampling fluid and/or overflow sample from the probe. In the embodiment, the wash fluid collection component comprises a wash fluid collection conduit 52 that defines a wash fluid channel 56 for receiving overflow sampling fluid from the sampling fluid opening 46. The collected wash fluid exits through a wash fluid outlet 60.

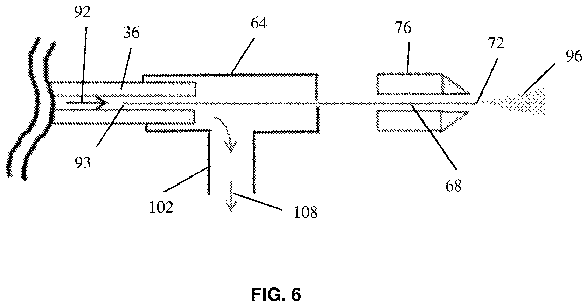

A sampling fluid exhaust fitting 64 defines a sampling fluid exhaust outlet 102. A sampling fluid analytic conduit 68 is provided in the flow channel 40 of the sampling fluid exhaust conduit 36. The sampling fluid analytic conduit 68 receives a portion of the sampling fluid flowing through the sampling fluid exhaust conduit 36 and delivers the analytic fluid to a discharge end 72 within a spray nozzle 76 such as a pneumatic nebulization nozzle for subsequent gas phase ionization at atmospheric pressure (Figure 6). In some embodiments, the spray nozzle 76 may include an analytic conduit pump to draw sampling fluid through the sampling fluid analytic conduit 68. In the embodiment of Figure 1B, the analytic conduit pump comprises suction applied at the discharge end 72 of the sampling fluid analytic conduit 68, wherein the suction is imparted by flowing a gas past the discharge end. In some embodiments, the gas may comprise a nebulization gas 79 supplied through gas conduit 77 to the nebulization gas channel 81 where the gas will contact sampling fluid leaving discharge end 72 of the sampling fluid analytic conduit 68 to nebulize the gas and draw sampling fluid through the sampling fluid analytic conduit 68. In alternate embodiments, any suitable pump can be used, such as a Venturi pump. In known fashion the nebulization nozzle 76 and the fluid analytic conduit 68 can be configured to form a plume of charged droplets or vapor plume 96 for electrospray ionization or another form of atmospheric pressure ionization like atmospheric pressure chemical ionization which can then be redirected to the inlet of a mass spectrometer (not shown).

Sampling fluid flows into the sampling fluid inlet 48 as shown by arrow 80. The sampling fluid then flows through the sampling fluid supply conduit 44 as indicated by arrow 84 and is exposed at the sampling fluid opening 46 to present a capture surface for contacting and capturing sample. Depending upon a mode of probe operation, the sampling fluid may form an overflow surface 88 at the sampling fluid opening 46 as the sampling fluid overflows the probe end 28 of the housing 24 when the probe is operated in an overflow mode of operation. In alternate embodiments the probe may operate in a balanced mode of operation wherein the rate of supply of sampling fluid to the sampling fluid opening 46 is balanced with the rate of exhaust through the sampling fluid exhaust conduit 36.

A third underflow mode of operation, wherein the rate of supply is less than the rate of exhaust, may be used in some embodiments. The underflow mode of operation is limited, however, to cases where the diameter and length of the sampling fluid exhaust conduit 36 allows for continuous supply of sampling fluid in the presence of entrained bubbles of air drawn into the exhaust conduit. Generally, with intended operation including a sampling fluid analytic conduit 68 the underflow mode may not operate effectively for all cases due to the entrained gas.

In the embodiment illustrated, overflow sampling fluid may enter the wash fluid channel 56 as indicated by arrow 104 and thereby wash the probe end 28 of the sampling fluid supply conduit 44 as well as the distal end of the sampling fluid exhaust conduit 36. Some of the sampling fluid enters the sampling fluid exhaust channel 40 of the sampling fluid exhaust conduit 36 as indicated by arrow 92. Some of the sampling fluid flowing through the sampling fluid exhaust conduit 36 is diverted at a diversion point and enters the sampling fluid analytic conduit 68. The remainder of the non-diverted sampling fluid flows past the diversion point through the sampling fluid exhaust conduit 36 and is directed through the outlet opening 102 as indicated by arrow 100 and can be assisted by exhaust pump 101. Overflow sampling fluid 104 overflowing the open-end 46 exits the wash fluid outlet 60 as indicated by arrow 108 and can be assisted by overflow pump 61, such as a vacuum pump.

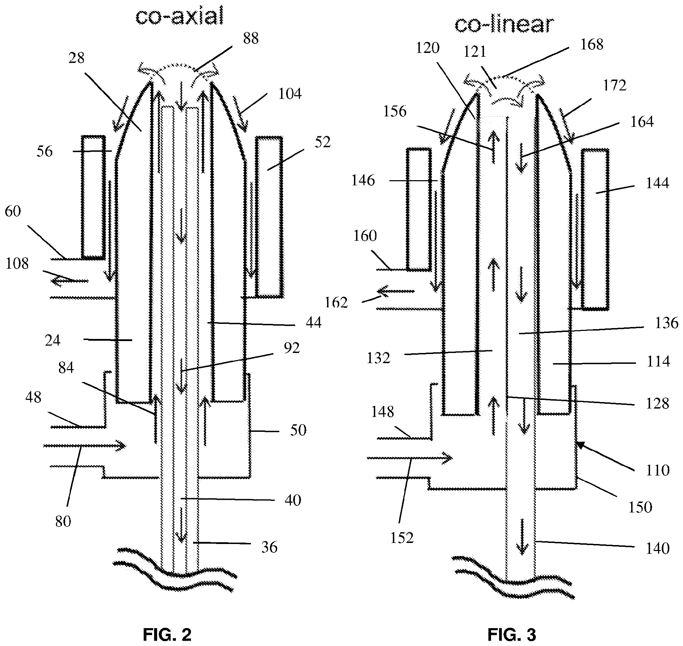

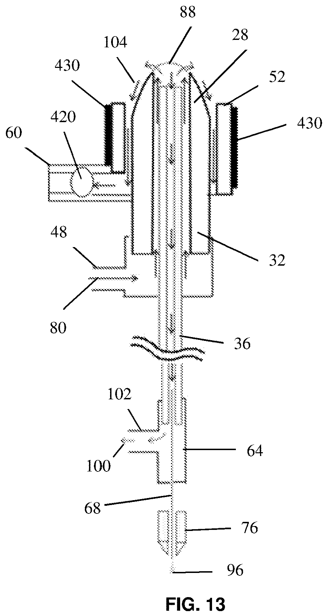

The particular arrangement of the sampling fluid supply conduit 44, the sampling fluid exhaust conduit 36, the sampling fluid analytic conduit 68, and if present the sampling fluid wash conduit 52 can vary. Figures 2, 3, 4, and 5 illustrate embodiments of a sampling probe operating in an overflow mode of operation. For example referring to Figure 2, in some embodiments, a co-axial relationship of the sampling fluid supply conduit 44 and the sampling fluid exhaust conduit 36 may be provided as also shown in Figures 1A and 13. In some embodiments, a probe 110 with a co-linear arrangement may be provided as shown in Figure 3. Figure 3 is a schematic diagram of a probe having co-linear orientation between the sampling fluid supply conduit and the sampling fluid exhaust conduit. As shown in Figure 3, the probe 110 includes a housing 114 defining an open interior and having a distal end 120 and a sampling fluid opening 121. A divider 128 divides the open interior into a sampling fluid supply conduit 132 and a sampling fluid exhaust conduit 136. The sampling fluid exhaust conduit 136 extends from the housing 114 as shown by portion 140 which can be a flexible conduit. A sampling fluid wash conduit 144 can be provided and defines a sampling fluid wash channel 146. A sampling fluid inlet 148 communicates with an inlet fitting 150 and supplies sampling fluid as indicated by arrow 152. Sampling fluid flows through the sampling fluid supply conduit 132 as indicated by arrow 156. The sampling fluid can form an overflow fluid surface 168 at the sampling fluid opening. Some of the sampling fluid enters the sampling fluid exhaust conduit 136 as indicated by arrow 164. Some of the sampling fluid overflows as indicated by arrow 172 and enters the sampling fluid wash channel 146 and exits through wash channel outlet 160 as indicated by flow arrow 162.

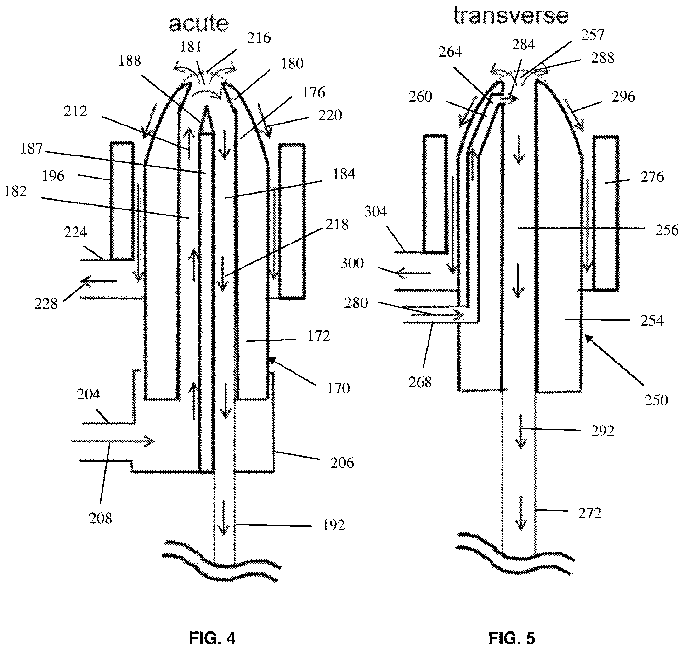

Figure 4 is a schematic diagram illustrating an embodiment of a probe 170 having an acute orientation, i.e. angle of intersection, between the sampling fluid supply conduit 182 and the sampling fluid exhaust conduit 184. The probe 170 has a housing 172 having a distal end 176 with inwardly and distally angled end flange 180 defining a sample opening 181. The end flange 180 is angled acutely with respect to the housing 172. A flow divider 187 defines a sampling fluid supply conduit 182 and a sampling fluid exhaust conduit 184. The sampling fluid exhaust conduit 184 can extend beyond the probe housing 172, as by for example a flexible portion 192 in this embodiment. The flow divider 187 can have an angled tip 188 for directing sampling fluid to and from the sampling fluid opening 181. A wash conduit 196 can be provided as previously described with a wash outlet 224. Sampling fluid enters the probe 170 through a sampling fluid inlet 204 of a sample fluid inlet fitting 206 and enters the sampling fluid supply conduit 182 as indicated by arrow 212. The sampling fluid flows to the sampling fluid opening 181 and can form an overflow liquid surface 216. Sampling fluid flows through the sampling fluid exhaust as indicated by flow arrow 218. Sampling fluid can overflow the sample fluid opening 181 as indicated by arrow 220 and enters the wash conduit 196 and exits through wash fluid outlet 224 as indicated by arrow 228.

Figure 5 is a schematic diagram of an embodiment of a probe 250 having a transverse orientation, i.e. a cross-flow angle of intersection, between the sampling fluid supply conduit 264 and the sampling fluid exhaust conduit 256. The probe 250 has a housing 254 defining an interior sampling fluid exhaust conduit 256 and a sampling fluid opening 257. A sampling fluid supply conduit 260 has an outlet opening 264 that directs sampling fluid transversely with respect to the sample fluid exhaust conduit 256 and the flow of sampling fluid flowing through the sample fluid exhaust conduit 256. The sampling fluid exhaust conduit 256 can extend out of the probe as indicated by flexible portion 272 in this embodiment. As illustrated, in some embodiments a wash conduit 276 may be provided. Sampling fluid flows into the sampling fluid supply conduit 260 through a sampling fluid inlet opening 268 as indicated by arrow 280. The sampling fluid is injected transversely with respect to the sampling fluid opening 257 as indicated by arrow 284. An overflow fluid surface 288 can be formed. Sampling fluid exits through the sampling fluid exhaust conduit 256 as indicated by arrow 292. Some of the fluid overflows the sampling fluid opening 257 as indicated by arrow 296 and enters the wash conduit 276 and exits through a wash fluid outlet 304 as indicated by arrow 300.

Figure 6 is a close up schematic diagram of a delivery end of the system for sampling including a sampling fluid exhaust conduit 36, a sampling fluid analytic conduit 68, and a spray nozzle 76. The sampling fluid flows through the sampling fluid exhaust conduit 36, as indicated by arrow 92, to a diversion point 93. Some of the sampling fluid flowing through the sampling fluid exhaust conduit 36 is diverted at the diversion point 93 and enters the sampling fluid analytic conduit 68. The remainder of the non-diverted sampling fluid 108 flows past the diversion point 93 through the sampling fluid exhaust conduit 36 and is directed through the outlet opening 102 as indicated by arrow 108. An exhaust pump, not illustrated in Figure 6, may be provided downstream from the diversion point 93 to transport the exhausting sampling fluid from the probe end to the diversion point and the remainder of the non-diverted sampling fluid may be discharged from the outlet opening 102 for disposal. In the embodiment of Figure 6, the diverted portion of sampling fluid is directed through the spray nozzle 76 for discharge at discharge end 72 in a spray or vapour plume 96. In this manner a smaller analytical fraction of the supplied sampling fluid may be separated from the sampling fluid transported from the probe end for supply to an analytical device for analysis. Conveniently this allows for a higher volumetric flow rate of sampling fluid at point of capture and transfer through the sampling fluid exhaust conduit 36, as may be suitable for timely transfer of the sampling fluid form the point of capture, and diverting a smaller volumetric flow rate of sampling fluid through the sampling fluid analytic conduit 68 to meet the requirements and/or limitations of the analytical device.

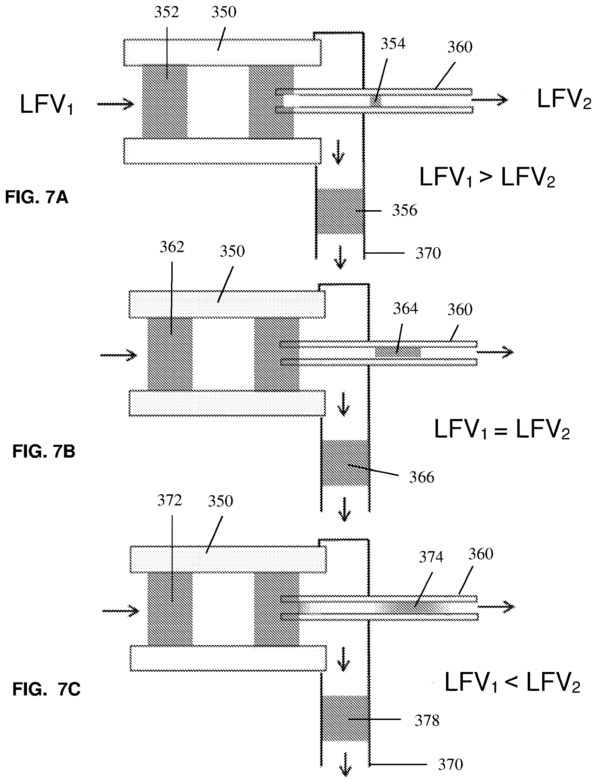

Figure 7 is a schematic of a sampling fluid exhaust conduit 350 and a sampling fluid analytic conduit 360 and showing the flow possibilities between the sampling fluid exhaust conduit 350 and the sampling fluid analytic conduit 360. Figure 7A shows the condition where the linear flow velocity (LFV) in the exhaust conduit 350 ($LFV_1$) is greater than the linear flow velocity in the sampling fluid analytic conduit 360 ($LFV_2$), such that $LFV_1 > LFV_2$. An analytic plug 354 of sampling fluid and captured sample in the analytic conduit 360 is shown to be smaller than the corresponding exhaust plug 352 in the exhaust conduit 350 or the outlet plug 356 in the sampling fluid outlet 370. Figure 7B shows the condition where the linear flow velocity flow in the exhaust conduit 350 is the same as the linear flow velocity in the analytic conduit 360, or $LFV_1 = LFV_2$. The analytic plug 364 in the analytic conduit 360 has an equal plug width to the exhaust plug 362 in the exhaust conduit 350 or the outlet plug 366 in the sampling fluid outlet 370. Figure 7C shows the condition where the linear flow velocity in the analytic conduit 360 is greater than the linear flow velocity in the exhaust conduit 350, or where $LFV_1 < LFV_2$. The analytic plug 374 in the sampling fluid analytic conduit 360 has a greater plug width than the plug width of the exhaust plug 372 in the exhaust conduit 350 or the plug width of the outlet plug 378 in the sampling fluid outlet 370.

Accordingly, it can be seen that by matching the linear flow velocities in the sampling fluid exhaust conduit 350 and the sampling fluid analytic conduit 360 the plug width of an analytic plug 364 of sampling fluid and captured sample may be matched to the plug width of an exhaust plug 362. In some methods it may be desirable to match the plug widths and to avoid dilution at the edges of the analytic plug 374 in the sampling fluid analytic conduit 360.

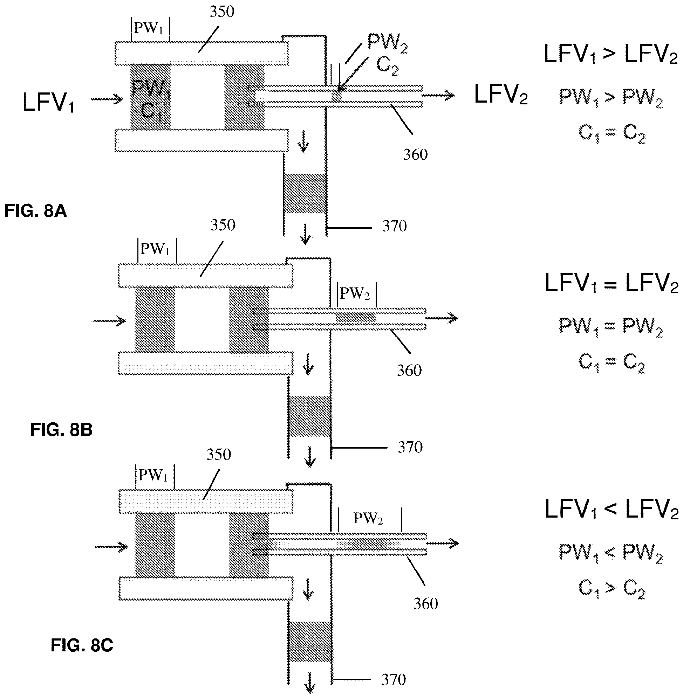

Figure 8 is a schematic diagram of fluid flow through the sampling fluid exhaust conduit 350, the sampling fluid analytic conduit 360, and the sampling fluid outlet 370, where LFV is the linear flow velocity, PW is the plug width, and C is the concentration of sample in the sampling fluid. As indicated, Figure 8A shows the condition where $LFV_1 > LFV_2$, $PW_1 > PW_2$, and $C_1 = C_2$ Figure 8B shows the condition where $LFV_1 = LFV_2$, $PW_1 = PW_2$, and $C_1 = C_2$. Figure 8C shows the condition where $LFV_1 < LFV_2$, $PW_1 < PW_2$, $C_1 > C_2$. In most embodiments it is desirable to preserve the concentration of the sample in the analytic plug i.e. to meet the condition that $LFV_1 = LFV_2$. In some aspects the other cases may be desirable, or at least tolerable, given a specific experiment being run.

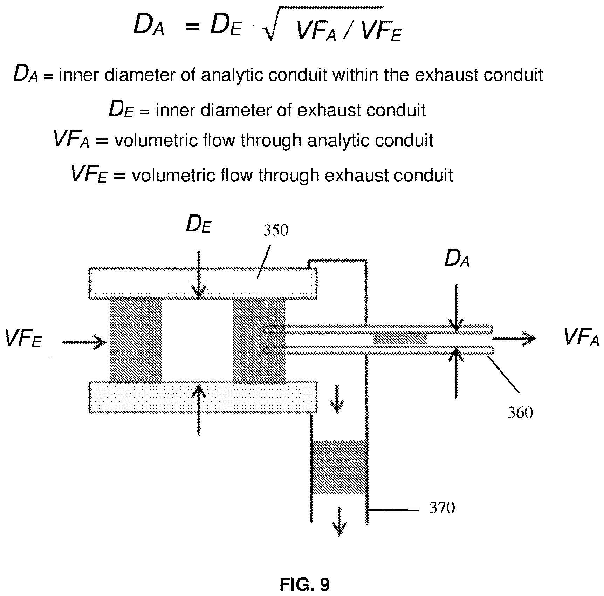

Figure 9 is a schematic diagram illustrating the calculation for $D_{iso}$. As can be seen $D_{iso}$ is the inner diameter of the sampling conduit within the main conduit, or the sampling fluid analytic conduit under isokinetic flow conditions. $D_M$ is the inner diameter of the main conduit or the sampling fluid exhaust conduit. $VF_E$ is the volumetric flow through the sampling fluid exhaust conduit and $VF_A$ is the set volumetric flow through the sampling fluid analytic conduit. The relationship is given by:

$$D_{iso} = D_M \sqrt{VF_A/VF_E}$$

The relation may be used to match a given pair of sampling fluid exhaust conduit 350 and sampling fluid analytic conduit 360. In some embodiments it may be desirable to change a diameter of the sampling fluid analytic conduit 360, for instance to switch between a μL supply to a nL supply to the analytical device. In this situation, the relation may be used to either select an appropriate diameter of the sampling fluid exhaust conduit 350, or the flow rates, in order to preserve the isokinetic flow condition.

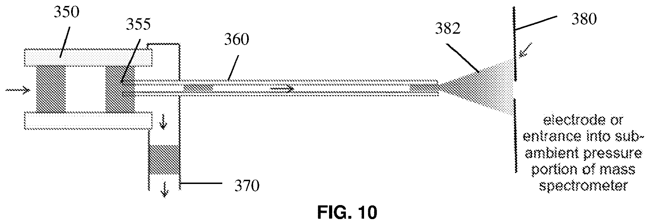

Figure 10 is a schematic illustration of a system according to the invention operating in an atmospheric pressure ionization mode. The invention is useful with many different kinds of atmospheric pressure ionization devices, for example electrospray ionization and various forms of atmospheric pressure chemical ionization (APCI). Fluid flows through the sampling fluid exhaust conduit 350 and a diverted portion enters the sampling fluid analytic conduit 360 at a diversion point 355. The remainder of the exhaust sampling fluid flows past the diversion point 355 exits through outlet 370. A charged droplet or vapor plume 382 is generated at the discharge end of the analytic conduit 360 and travels in the direction of electrode 380. Gas phase ions created in this area by the electrospray process or by gas phase ion molecule reactions with reagent ion such as in corona discharge atmospheric pressure chemical ionization are transferred into a sub ambient pressure portion of the mass spectrometer (not shown).

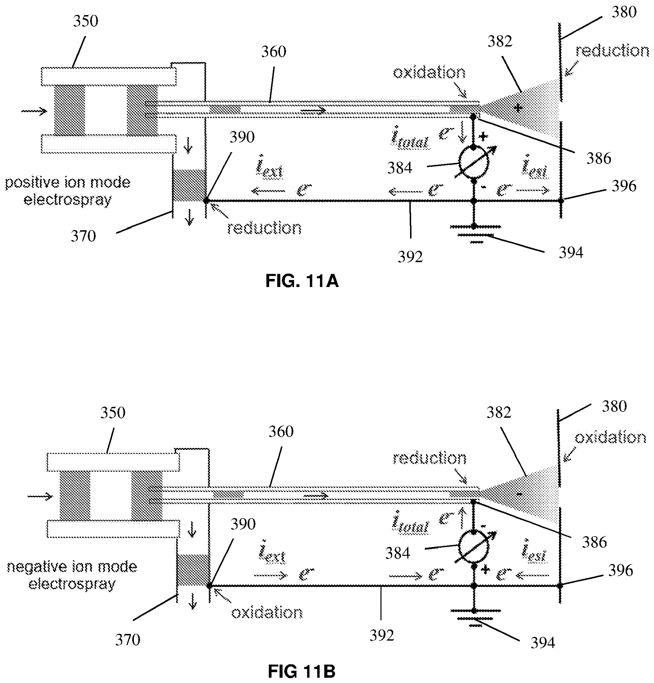

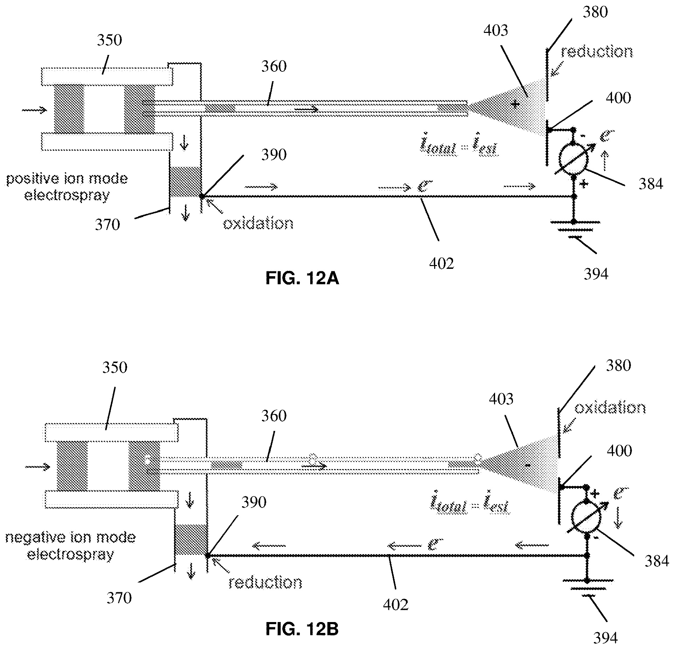

Figure 11 is a schematic illustration of a first circuit connection system according to the invention ion positive ion mode electrospray (Figure 11A) and negative ion mode electrospray (Figure 12B). In positive ion mode electrospray (Figure 11A), a voltage source 384 is connected to the electrospray outlet at a connection 386 and to a ground 394. An electrical connection 392 is connected to an electrical contact 390 at the sampling fluid exhaust outlet 370 and another electrical contact 396 is made at the electrode 380. In negative ion mode electrospray (Figure 11B) the polarity of the voltage source 384 is reversed. Positive or negative electrospray 382 is thereby provided.

Figure 12 is a schematic illustration of a second circuit connection system according to the invention ion positive ion mode electrospray (Figure 12A) and negative ion mode electrospray (Figure 12B). In this orientation, the voltage source 384 is connected to the electrode 380 at an electrical contact 400 and to the ground 394. An electrical connection 402 connects between electrical contact 390 at the sampling fluid exhaust outlet 370 and the positive side of voltage source 384. In negative ion mode electrospray (Figure 12 B) the polarity of the voltage source 384 is reversed. Positive or negative electrospray 403 is thereby provided.

Figure 13 illustrates an alternate embodiment of a sampling system in which the probe may be operated in an overflow, balanced, and in some cases underflow mode of operation, though only the overflow mode is illustrated in the Figure.

Figure 13 is a schematic diagram of a system for sampling shown in Figures 1-2, where like numbers refer to like elements, but including a wash fluid collection component with a vacuum source to draw the overflow fluid 104 into the wash conduit 52. A pump or other vacuum source shown schematically as 420 is provided. The application of a vacuum to the wash conduit 420 will enable the withdrawal of overflow sample liquid from the probe without spillage in any orientation of the probe with respect to gravity. The overflowing sampling fluid will be drawn into the sample conduit 52 to prevent the sampling fluid from dripping or flowing away from the probe.

In some embodiments, the wash fluid collection component may be operative to actively capture overflow sampling fluid and/or overflow sample from a region about the probe end. In these embodiments, the wash fluid collection component may be operative to actively capture overflow sampling fluid and/or overflow sample by employing a vacuum source to impart a suction effect at the wash fluid inlet that is sufficiently strong to partially evacuate a region about the probe end and sampling fluid opening to draw in overflow sampling fluid and/or overflow sample from the region that is not successfully captured in the capture surface of the probe.

In some embodiments, the suction effect may be sufficiently strong to capture overflow solvent and/or overflow sample in the region about the probe end and to draw the captured overflow solvent and/or overflow sample into the wash fluid inlet against the influence of gravity. These embodiments may be useful, for instance, where a flexible sample fluid exhaust conduit 36 is provided that allows for a variety of orientations of the probe, including an inverted orientation. These embodiments may also be useful, for instance, where the probe is in a fixed orientation but oriented such that passive wash fluid collection will not guarantee capture of overflow sampling fluid. As an example, a probe operating in balanced mode but oriented with the capture surface facing down may overflow sampling fluid in the case that the exhaust pump fails. In this case, a wash fluid collection component operating with a separate vacuum source would prevent loss of the sampling fluid.

In some embodiments, heating elements 430 can be provided to prevent the formation of condensation on exterior walls of the wash conduit 52.

This invention can be embodied in other forms. Reference should therefore be made to the following claims to determine the scope of the invention.

## Claims

1.    A sampling system comprising:

a sampling probe (20) comprising:
a housing (24), the housing (24) having a probe end (28) with a sampling fluid opening (46), a sampling fluid supply conduit (44) and a sampling fluid exhaust conduit (36), the sampling fluid supply conduit (44) supplying sampling fluid to the sampling fluid opening (46), the sampling fluid exhaust conduit (36) comprising a wall, a sampling fluid exhaust conduit inlet opening for removing sampling fluid from the sampling fluid opening (46), and a sampling fluid exhaust conduit outlet opening for removing fluid from the sampling fluid exhaust conduit (36);
a sampling fluid analytic conduit (68), the sampling fluid analytic conduit (68) having a sampling fluid analytic conduit inlet opening spaced upstream from the sampling fluid exhaust conduit outlet opening, downstream from the sampling fluid exhaust conduit (36) inlet opening, fluid flowing through the sampling fluid exhaust conduit having a flow axis at the sampling fluid analytic conduit inlet opening that is parallel to a flow axis of fluid flowing through the sampling fluid analytic conduit inlet opening, the sampling fluid analytic conduit inlet opening being spaced from the wall of the sampling fluid exhaust conduit (36); and,

the system further comprising at least one pump for continuously moving sampling fluid through the sampling fluid supply conduit (44) to the sampling fluid opening (46), and through the sampling fluid exhaust conduit (36), and at least one analytic conduit pump for moving sampling fluid through the sampling fluid analytic conduit (68), a portion of the sampling fluid exiting the sampling fluid opening (46) to contact the sample and returning to the sampling fluid exhaust conduit inlet opening, a portion of the sampling fluid exiting the sampling fluid opening (46) to wash the probe end (28), and a portion of the sampling fluid exiting the probe through the sampling fluid analytic conduit (68).

2. The system of claim 1, wherein the volumetric flow rate of sampling fluid through the sampling fluid analytic conduit (68) is from 0.0001 % to 100 % of the volumetric flow rate of sampling fluid through the sampling fluid exhaust conduit (36).

3. The system of claim 1, wherein the sampling fluid analytic conduit (68) and the sampling fluid exhaust conduit (36) have an inside diameter, and the inside diameter of the sampling fluid analytic conduit (68) is from 0.2 % to 100 % of the inside diameter of the sampling fluid exhaust conduit (36).

4. The system of claim 1, wherein the plug width of sampling fluid flowing through the sampling fluid analytic conduit (68) is from 0.2 % to 100 % of the plug width of sampling fluid flowing through the sampling fluid exhaust conduit (36).

5. The system of claim 1, wherein the relationship between the volumetric flow rate of sampling fluid flowing through the sampling fluid exhaust conduit ($VF_E$), the volumetric flow rate of sampling fluid flowing through the sampling fluid analytic conduit ($VF_A$), the inside diameter of the sampling fluid exhaust conduit ($D_E$), and the inside diameter of the sampling fluid analytic conduit ($D_A$) is:

$$D_A = D_E \sqrt{VF_A / VF_E}$$

6. The system of claim 1, further comprising a wash fluid collection conduit (52), the wash fluid collection conduit (52) having a wash fluid inlet opening and a wash fluid outlet opening (60), a portion of the sampling fluid overflowing the probe end (28) and entering the wash fluid collection conduit (52), the overflowing sampling fluid washing the distal end of at least one of the sampling fluid supply conduit (44) and the sampling fluid exhaust conduit (36); the at least one pump moving sampling fluid through the wash fluid collection conduit (52) and out of the wash fluid outlet opening (60), and optionally wherein the system further comprises a heater for heating the wash fluid collection conduit (52) to prevent the formation of condensation on exterior walls of the wash fluid collection conduit (52).

7. The system of claim 1, wherein the sampling fluid supply conduit (44) and the sampling fluid exhaust conduit (36) are coaxial.

8. The system of claim 1, wherein the sampling fluid exhaust conduit (36) and the sampling fluid analytic conduit (68) are coaxial.

9. The system of claim 1, wherein the sampling fluid supply conduit (44) and the sampling fluid exhaust conduit (36) are co-linear.

10. The system of claim 1, wherein the sampling fluid supply conduit (44) and the sampling fluid exhaust conduit (36) are acute.

11. The system of claim 1, wherein the sampling fluid supply conduit (44) and the sampling fluid exhaust conduit (36) are transverse.

12. The system of claim 1, wherein the sampling fluid analytic conduit (68) is in fluid communication with a sampling fluid analytic pump.

13. The system of claim 1, wherein the sampling fluid analytic conduit (68) comprises a non-conductive outlet portion and optionally wherein the non-conductive outlet portion comprises
an electrode for applying a voltage from a voltage source to sampling fluid flowing through the outlet portion.

14. The system of claim 12, further comprising a conductive electrospray entrance, the electrospray entrance comprising an electrode for applying a voltage from a voltage source to the electrospray electrode.

15. A method for sampling, comprising the steps of:
providing a sampling probe (20) comprising:

a housing (24) having a probe end (28) with a sampling fluid opening (46), a sampling fluid supply conduit (44) and a sampling fluid exhaust conduit, the sampling fluid supply conduit (44) supplying sampling fluid to the sampling fluid opening (46), the sampling fluid exhaust conduit (36) comprising a wall and a sampling fluid exhaust conduit inlet opening for removing sampling fluid from the sampling fluid opening (46) and a sampling fluid exhaust conduit outlet opening for removing sampling fluid from the sampling fluid exhaust conduit (36);

a sampling fluid analytic conduit (68), the sampling fluid analytic conduit (68) having an sampling fluid analytic conduit inlet opening spaced upstream from the sampling fluid exhaust conduit outlet opening and downstream from the sampling fluid exhaust conduit inlet opening, fluid flowing through the sampling fluid exhaust conduit (36) having a flow axis at the sampling fluid analytic conduit inlet opening that is parallel to a flow axis of fluid flowing through the sampling fluid analytic conduit inlet opening, the sampling fluid analytic conduit inlet opening being spaced from the wall of the sampling fluid exhaust conduit (36); and,

the method further comprising the step of moving sampling fluid through the sampling fluid supply conduit (44) to the sampling fluid opening (46), through the sampling fluid exhaust conduit (36), and the sampling fluid analytic conduit (68), a portion of the sampling fluid exiting the sampling fluid opening (46) to contact the sample and returning to the sampling fluid exhaust conduit inlet opening, a portion of the sampling fluid exiting the sampling fluid opening (46) to wash the probe end (28), and a portion of the sampling fluid exiting the probe through the sampling fluid analytic conduit (68), and optionally wherein the sampling fluid flowing through the sampling fluid analytic conduit (68) is isokinetic with the sampling fluid flowing through the sampling fluid exhaust conduit (36).

## Patentansprüche

1. Probenahmesystem, umfassend:

eine Probenahmesonde (20), umfassend:
ein Gehäuse (24), wobei das Gehäuse (24) ein Sondenende (28) mit einer Probenfluidöffnung (46), eine Probenfluidzufuhrleitung (44) und eine Probenfluidablassleitung (36) aufweist, wobei die Probenfluidzufuhrleitung (44) der Probenfluidöffnung (46) Probenfluid zuführt, wobei die Probenfluidablassleitung (36) eine Wand, eine Einlassöffnung der Probenfluidablassleitung zur Entnahme von Probenfluid aus der Probenfluidöffnung (46), und eine Auslassöffnung der Probenfluidablassleitung zur Entnahme von Probenfluid aus der Probenfluidablassleitung (36) umfasst;
eine Probenfluidanalyseleitung (68), wobei die Probenfluidanalyseleitung (68) eine Einlassöffnung für die Probenfluidanalyseleitung aufweist, die sich beabstandet stromaufwärts von der Auslassöffnung der Probenfluidablassleitung und stromabwärts von der Einlassöffnung der Probenfluidablassleitung (36) befindet, wobei das durch die Probenfluidablassleitung strömende Fluid eine Strömungsachse an der Einlassöffnung der Probenfluidanalyseleitung aufweist, die parallel zu einer Strömungsachse des Fluids ist, das durch die Einlassöffnung der Probenfluidanalyseleitung fließt, wobei die Einlassöffnung der Probenfluidanalyseleitung von der Wand der Probenfluidablassleitung beabstandet ist; und,

wobei das System weiter mindestens eine Pumpe zur kontinuierlichen Bewegung von Probenfluid durch die Probenfluidzufuhrleitung (44) zu der Probenfluidöffnung (46) und durch die Probenfluidablassleitung (36), und mindestens eine Analyseleitungspumpe zum Bewegen von Probenfluid durch die Probenfluidanalyseleitung (68) umfasst, wobei ein Teil des Probenfluids aus der Probenfluidöffnung (46) austritt, um die Probe zu kontaktieren und zu der Einlassöffnung der Probenfluidablassleitung zurückzukehren, ein Teil des Probenfluids aus der Probenfluidöffnung (46) austritt, um das Sondenende (28) zu waschen, und ein Teil des Probenfluids die Sonde durch die Probenfluidanalyseleitung (68) verlässt.

2. System nach Anspruch 1, wobei der Volumenstrom des Probenfluids durch die Probenfluidanalyseleitung (68) von 0,0001 % bis 100 % des Volumenstroms des Probenfluids durch die Probenfluidablassleitung (36) beträgt.

3. System nach Anspruch 1, wobei die Probenfluidanalyseleitung (68) und die Probenfluidablassleitung (36) einen Innendurchmesser haben und der Innendurchmesser der Probenfluidanalyseleitung (68) von 0,2 % bis 100 % des Innendurchmessers der Probenfluidablassleitung (36) beträgt.

4. System nach Anspruch 1, wobei die Pfropfenbreite des Probenfluids, das durch die Probenfluidanalyseleitung (68) strömt, von 0,2 % bis 100 % der Pfropfenbreite des Probenfluids beträgt, das durch die Probenfluidablassleitung (36) strömt.

5. System nach Anspruch 1, wobei die Beziehung zwischen dem Volumenstrom des Probenfluids, das durch die Probenfluidablassleitung ($VF_E$) strömt, dem Volumenstrom des Probenfluids, das durch die Probenfluidanalyseleitung ($VF_A$) strömt, dem Innendurchmesser der Probenfluidablassleitung ($D_E$) und dem Innendurchmesser der Probenfluidanalyseleitung ($D_A$) Folgende ist:

$$D_A = D_E \sqrt{VF_A / VF_E}$$

**6.** System nach Anspruch 1, weiter umfassend eine Waschfluidsammelleitung (52), wobei die Waschfluidsammelleitung (52) eine Waschfluideinlassöffnung und eine Waschfluidauslassöffnung (60) aufweist, wobei ein Teil des Probenfluids über das Sondenende (28) hinausfließt und in die Waschfluidsammelleitung (52) eintritt, wobei das überfließende Probenfluid das distale Ende zumindest einer der Probenfluidzufuhrleitung (44) und der Probenfluidablassleitung (36) wäscht; wobei die mindestens eine Pumpe Probenfluid durch die Waschfluidsammelleitung (52) und aus der Waschfluidauslassöffnung (60) heraus bewegt, und wobei das System optional weiter eine Heizung zum Beheizen der Waschfluidsammelleitung (52) umfasst, um die Bildung von Kondenswasser an den Außenwänden der Waschfluidsammelleitung (52) zu verhindern.

**7.** System nach Anspruch 1, wobei die Probenfluidzufuhrleitung (44) und die Probenfluidablassleitung (36) koaxial sind.

**8.** System nach Anspruch 1, wobei die Probenfluidablassleitung (36) und die Probenfluidanalyseleitung (68) koaxial sind.

**9.** System nach Anspruch 1, wobei die Probenfluidzufuhrleitung (44) und die Probenfluidablassleitung (36) co-linear sind.

**10.** System nach Anspruch 1, wobei die Probenfluidzufuhrleitung (44) und die Probenfluidablassleitung (36) spitzwinklig sind.

**11.** System nach Anspruch 1, wobei die Probenfluidzufuhrleitung (44) und die Probenfluidablassleitung (36) quer verlaufen.

**12.** System nach Anspruch 1, wobei die Probenfluidanalyseleitung (68) mit einer Probenfluidanalysepumpe in Fluidverbindung steht.

**13.** System nach Anspruch 1, wobei die Probenfluidanalyseleitung (68) einen nichtleitenden Auslassabschnitt umfasst und wobei der nichtleitende Auslassabschnitt optional eine Elektrode zum Anlegen einer Spannung von einer Spannungsquelle an das Probenfluid, das durch den Auslassabschnitt strömt, umfasst.

**14.** System nach Anspruch 12, weiter umfassend einen leitfähigen Elektrospray-Eingang, wobei der Elektrospray-Eingang eine Elektrode zum Anlegen einer Spannung von einer Spannungsquelle an die Elektrospray-Elektrode umfasst.

**15.** Verfahren zur Probenahme, umfassend die folgenden Schritte:
Bereitstellen einer Probenahmesonde (20), die Folgendes umfasst:

ein Gehäuse (24) mit einem Sondenende (28) mit einer Probenfluidöffnung (46), einer Probenfluidzufuhrleitung (44) und einer Probenfluidablassleitung (36), wobei die Probenfluidzufuhrleitung (44) der Probenfluidöffnung (46) Probenfluid zuführt, wobei die Probenfluidablassleitung (36) eine Wand und eine Einlassöffnung der Probenfluidablassleitung zur Entnahme von Probenfluid aus der Probenfluidöffnung (46) und eine Auslassöffnung der Probenfluidablassleitung zur Entnahme von Probenfluid aus der Probenfluidablassleitung (36) umfasst;
eine Probenfluidanalyseleitung (68), wobei die Probenfluidanalyseleitung (68) eine Einlassöffnung für die Probenfluidanalyseleitung aufweist, die sich beabstandet stromaufwärts von der Auslassöffnung der Probenfluidablassleitung und stromabwärts von der Einlassöffnung der Probenfluidablassleitung (36) befindet, wobei das durch die Probenfluidablassleitung strömende Fluid eine Strömungsachse an der Einlassöffnung der Probenfluidanalyseleitung aufweist, die parallel zu einer Strömungsachse des Fluids ist, das durch die Einlassöffnung der Probenfluidanalyseleitung fließt, wobei die Einlassöffnung der Probenfluidanalyseleitung von der Wand der Probenfluidablassleitung beabstandet ist; und,
wobei das Verfahren weiter den Schritt des Bewegens von Probenfluid durch die Probenfluidzufuhrleitung (44) zu der Probenfluidöffnung (46), durch die Probenfluidablassleitung (36) und die Probenfluidanalyseleitung (68) umfasst, wobei ein Teil des Probenfluids aus der Probenfluidöffnung (46) austritt, um die Probe zu kontaktieren und zu der Einlassöffnung der Probenfluidablassleitung zurückzukehren, ein Teil des Probenfluids aus der Probenfluidöffnung (46) austritt, um das Sondenende (28) zu waschen, und ein Teil des Probenfluids die Sonde durch die Probenfluidanalyseleitung (68) verlässt, und wobei das durch die Probenfluidanalyseleitung (68) strömende Probenfluid optional isokinetisch mit dem Probenfluid ist, das durch die Probenfluidablassleitung (36) strömt.

## Revendications

1. Système d'échantillonnage comprenant :
une sonde d'échantillonnage (20) comprenant :

un boîtier (24), le boîtier (24) présentant une extrémité (28) de sonde comportant un orifice (46) de fluide d'échantillonnage, un conduit d'alimentation (44) en fluide d'échantillonnage et un conduit d'évacuation (36) de fluide d'échantillonnage, le conduit d'alimentation (44) en fluide d'échantillonnage amenant du fluide d'échantillonnage à l'orifice (46) de fluide d'échantillonnage, le conduit d'évacuation (36) de fluide d'échantillonnage comprenant une paroi, un orifice d'entrée de conduit d'évacuation de fluide d'échantillonnage pour retirer du fluide d'échantillonnage de l'orifice (46) de fluide d'échantillonnage, et un orifice de sortie de conduit d'évacuation de fluide d'échantillonnage pour retirer du fluide du conduit d'évacuation (36) de fluide d'échantillonnage ;
un conduit analytique (68) de fluide d'échantillonnage, le conduit analytique (68) de fluide d'échantillonnage présentant un orifice d'entrée de conduit analytique de fluide d'échantillonnage espacé en amont de l'orifice de sortie de conduit d'évacuation de fluide d'échantillonnage, en aval de l'orifice d'entrée de conduit d'évacuation (36) de fluide d'échantillonnage, le fluide s'écoulant dans le conduit d'évacuation de fluide d'échantillonnage ayant un axe de flux au niveau de l'orifice d'entrée de conduit analytique de fluide d'échantillonnage qui est parallèle à un axe de flux de fluide s'écoulant à travers l'orifice d'entrée de conduit analytique de fluide d'échantillonnage, l'orifice d'entrée de conduit analytique de fluide d'échantillonnage étant espacé de la paroi du conduit d'évacuation (36) de fluide d'échantillonnage ; et
le système comprenant en outre au moins une pompe pour déplacer en continu du fluide d'échantillonnage dans le conduit d'alimentation (44) en fluide d'échantillonnage vers l'orifice (46) de fluide d'échantillonnage, et dans le conduit d'évacuation (36) de fluide d'échantillonnage, et au moins une pompe de conduit analytique pour déplacer du fluide d'échantillonnage dans le conduit analytique (68) de fluide d'échantillonnage, une partie du fluide d'échantillonnage sortant de l'orifice (46) de fluide d'échantillonnage pour entrer en contact avec l'échantillon et retournant vers l'orifice d'entrée du conduit d'évacuation de fluide d'échantillonnage, une partie du fluide d'échantillonnage sortant de l'orifice (46) de fluide d'échantillonnage pour laver l'extrémité (28) de la sonde, et une partie du fluide d'échantillonnage sortant de la sonde par le conduit analytique (68) de fluide d'échantillonnage.

2. Système selon la revendication 1, dans lequel le débit volumétrique de fluide d'échantillonnage dans le conduit analytique (68) de fluide d'échantillonnage représente de 0,0001 % à 100 % du débit volumétrique de fluide d'échantillonnage dans le conduit d'évacuation (36) de fluide d'échantillonnage.

3. Système selon la revendication 1, dans lequel le conduit analytique (68) de fluide d'échantillonnage et le conduit d'évacuation (36) de fluide d'échantillonnage ont un diamètre interne, et le diamètre interne du conduit analytique (68) de fluide d'échantillonnage représente de 0,2 % à 100 % du diamètre interne du conduit d'évacuation (36) de fluide d'échantillonnage.

4. Système selon la revendication 1, dans lequel la largeur de bouchon de fluide d'échantillonnage s'écoulant dans le conduit analytique (68) de fluide d'échantillonnage représente de 0,2 % à 100 % de la largeur de bouchon de fluide d'échantillonnage s'écoulant dans le conduit d'évacuation (36) de fluide d'échantillonnage.

5. Système selon la revendication 1, dans lequel la relation entre le débit volumétrique de fluide d'échantillonnage s'écoulant dans le conduit d'évacuation de fluide d'échantillonnage ($VF_E$), le débit volumétrique de fluide d'échantillonnage s'écoulant dans le conduit analytique de fluide d'échantillonnage ($VF_A$), le diamètre interne du conduit d'évacuation de fluide d'échantillonnage ($D_E$), et le diamètre interne du conduit analytique de fluide d'échantillonnage ($D_A$) est :

$$D_A = D_E \sqrt{VF_A / VF_E} \; .$$

6. Système selon la revendication 1, comprenant en outre un conduit de collecte (52) de fluide de lavage, le conduit de collecte (52) de fluide de lavage présentant un orifice d'entrée de fluide de lavage et un orifice de sortie (60) de fluide de lavage, une partie du fluide d'échantillonnage débordant de l'extrémité (28) de la sonde et entrant dans le conduit de collecte (52) de fluide de lavage, le fluide d'échantillonnage qui déborde lavant l'extrémité distale d'au moins un parmi le conduit d'alimentation (44) en fluide d'échantillonnage et le conduit d'évacuation (36) de fluide d'échantillonnage ; ladite au moins une pompe déplaçant du fluide d'échantillonnage dans le conduit de collecte (52) de fluide de lavage et hors de l'orifice de sortie (60) de fluide de lavage, et en option dans lequel le système comprend en outre un dispositif de chauffage pour chauffer le conduit de collecte (52) de fluide de lavage afin d'empêcher la formation de condensation sur les parois extérieures du conduit de collecte (52) de fluide de lavage.

7. Système selon la revendication 1, dans lequel le conduit d'alimentation (44) en fluide d'échantillonnage et le conduit d'évacuation (36) de fluide d'échantillonnage sont coaxiaux.

8. Système selon la revendication 1, dans lequel le conduit d'évacuation (36) de fluide d'échantillonnage et le conduit analytique (68) de fluide d'échantillonnage sont coaxiaux.

9. Système selon la revendication 1, dans lequel le conduit d'alimentation (44) en fluide d'échantillonnage et le conduit d'évacuation (36) de fluide d'échantillonnage sont colinéaires.

10. Système selon la revendication 1, dans lequel le conduit d'alimentation (44) en fluide d'échantillonnage et le conduit d'évacuation (36) de fluide d'échantillonnage forment un angle aigu.

11. Système selon la revendication 1, dans lequel le conduit d'alimentation (44) en fluide d'échantillonnage et le conduit d'évacuation (36) de fluide d'échantillonnage sont transversaux.

12. Système selon la revendication 1, dans lequel le conduit analytique (68) de fluide d'échantillonnage est en communication fluidique avec une pompe analytique de fluide d'échantillonnage.

13. Système selon la revendication 1, dans lequel le conduit analytique (68) de fluide d'échantillonnage comprend une partie de sortie non conductrice et en option dans lequel la partie de sortie non conductrice comprend une électrode pour appliquer une tension provenant d'une source de tension sur du fluide d'échantillonnage s'écoulant à travers la partie de sortie.

14. Système selon la revendication 12, dans lequel comprenant en outre une entrée d'électronébulisation conductrice, l'entrée d'électronébulisation comprenant une électrode pour appliquer une tension provenant d'une source de tension sur l'électrode d'électronébulisation.

15. Procédé pour échantillonner, comprenant les étapes consistant à :
fournir une sonde d'échantillonnage (20) comprenant :

un boîtier (24) présentant une extrémité (28) de sonde comportant un orifice (46) de fluide d'échantillonnage, un conduit d'alimentation (44) en fluide d'échantillonnage et un conduit d'évacuation de fluide d'échantillonnage, le conduit d'alimentation (44) en fluide d'échantillonnage amenant du fluide d'échantillonnage à l'orifice (46) de fluide d'échantillonnage, le conduit d'évacuation (36) de fluide d'échantillonnage comprenant une paroi et un orifice d'entrée de conduit d'évacuation de fluide d'échantillonnage pour retirer du fluide d'échantillonnage de l'orifice (46) de fluide d'échantillonnage et un orifice de sortie de conduit d'évacuation de fluide d'échantillonnage pour retirer du fluide d'échantillonnage du conduit d'évacuation (36) de fluide d'échantillonnage ;

un conduit analytique (68) de fluide d'échantillonnage, le conduit analytique (68) de fluide d'échantillonnage présentant un orifice d'entrée de conduit analytique de fluide d'échantillonnage espacé en amont de l'orifice de sortie de conduit d'évacuation de fluide d'échantillonnage et en aval de l'orifice d'entrée de conduit d'évacuation de fluide d'échantillonnage, le fluide s'écoulant dans le conduit d'évacuation (36) de fluide d'échantillonnage ayant un axe de flux au niveau de l'orifice d'entrée de conduit analytique de fluide d'échantillonnage qui est parallèle à un axe de flux de fluide s'écoulant à travers l'orifice d'entrée du conduit analytique de fluide d'échantillonnage, l'orifice d'entrée du conduit analytique de fluide d'échantillonnage étant espacé de la paroi du conduit d'évacuation (36) de fluide d'échantillonnage ; et

le procédé comprenant en outre l'étape consistant à déplacer du fluide d'échantillonnage dans le conduit d'alimentation (44) en fluide d'échantillonnage vers l'orifice (46) de fluide d'échantillonnage, dans le conduit d'évacuation (36) de fluide d'échantillonnage, et le conduit analytique (68) de fluide d'échantillonnage, une partie du fluide d'échantillonnage sortant de l'orifice (46) de fluide d'échantillonnage pour entrer en contact avec l'échantillon et retournant vers l'orifice d'entrée du conduit d'évacuation de fluide d'échantillonnage, une partie du fluide d'échantillonnage sortant de l'orifice (46) de fluide d'échantillonnage pour laver l'extrémité (28) de la sonde, et une partie du fluide d'échantillonnage sortant de la sonde par le conduit analytique (68) de fluide d'échantillonnage, et en option dans lequel le fluide d'échantillonnage s'écoulant dans le conduit analytique (68) de fluide d'échantillonnage est isocinétique avec le fluide d'échantillonnage s'écoulant dans le conduit d'évacuation (36) de fluide d'échantillonnage.

**FIG. 1A**

**FIG. 1B**

co-axial

co-linear

FIG. 2

FIG. 3

FIG. 4

FIG. 5

**FIG. 6**

FIG. 7A

FIG. 7B

FIG. 7C

$LFV_1 > LFV_2$

$LFV_1 = LFV_2$

$LFV_1 < LFV_2$

FIG. 8A

$$LFV_1 > LFV_2$$
$$PW_1 > PW_2$$
$$C_1 = C_2$$

FIG. 8B

$$LFV_1 = LFV_2$$
$$PW_1 = PW_2$$
$$C_1 = C_2$$

FIG. 8C

$$LFV_1 < LFV_2$$
$$PW_1 < PW_2$$
$$C_1 > C_2$$

$$D_A = D_E \sqrt{VF_A / VF_E}$$

$D_A$ = inner diameter of analytic conduit within the exhaust conduit

$D_E$ = inner diameter of exhaust conduit

$VF_A$ = volumetric flow through analytic conduit

$VF_E$ = volumetric flow through exhaust conduit

FIG. 9

350
355
360
382
380

electrode or
entrance into sub-
ambient pressure
portion of mass
spectrometer

370

**FIG. 10**

FIG. 11A

FIG 11B

FIG. 12A

FIG. 12B

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6803566 B
- US 6784439 B
- US 8519330 B
- US 6677593 B
- US 9063047 B
- US 8486703 B
- US 8384020 B
- US 7295026 B
- US 8637813 B
- US 8117929 B
- US 9153425 B
- US 7995216 B
- US 9064680 B
- US 8003937 B
- US 9140633 B
- US 9176025 B
- US 9390901 B
- US 8084735 B
- US 9632066 B
- US 9297828 B
- US 20160299041 A
- US 2016299109 A1